# EUROPEAN PATENT SPECIFICATION

(11) **EP 4 369 658 B1**
(45) Date of publication and mention of the grant of the patent: **26.08.2026**
(21) Application number: 23203963.6
(22) Date of filing: 17.10.2023
(51) Int. Cl.: H04L 9/40, H04L 9/00, H04L 9/32, G06F 11/1446

(54) **METHOD OF STORING BLOCKCHAIN TRANSACTION DATA USING FOUNTAIN CODES AND APPARATUS FOR THE SAME**
VERFAHREN ZUR SPEICHERUNG VON BLOCKCHAIN-TRANSAKTIONSDATEN UNTER VERWENDUNG VON FOUNTAIN-CODES UND VORRICHTUNG DAFÜR
PROCÉDÉ DE STOCKAGE DE DONNÉES DE TRANSACTION DE CHAÎNE DE BLOCS À L'AIDE DE CODES FONTAINE ET APPAREIL ASSOCIÉ

(30) Priority: 21.10.2022 KR 20220136501; 16.08.2023 KR 20230106652
(43) Date of publication of application: 15.05.2024
(73) Proprietor: Electronics and Telecommunications Research Institute, Daejeon 34129 (KR)
(72) Inventor: CHOI, Beong-Jun, Daejeon 34129 (KR); LEE, Myung-Cheol, Daejeon 34129 (KR)
(74) Representative: Betten & Resch

(56) References cited:
- US-A1- 2021 405 908
- ZHANG LIHAO ET AL: "Speeding up block propagation in Bitcoin network: Uncoded and coded designs", COMPUTER NETWORKS, ELSEVIER, AMSTERDAM, NL, vol. 206, 22 January 2022 (2022-01-22), XP086983332, ISSN: 1389-1286, [retrieved on 20220122], DOI: 10.1016/J.COMNET.2022.108791
- SWANAND KADHE ET AL: "SeF: A Secure Fountain Architecture for Slashing Storage Costs in Blockchains", ARXIV.ORG, CORNELL UNIVERSITY LIBRARY, 201 OLIN LIBRARY CORNELL UNIVERSITY ITHACA, NY 14853, 28 June 2019 (2019-06-28), XP081385486
- QI XIAODONG ET AL: "A Reliable Storage Partition for Permissioned Blockchain", IEEE TRANSACTIONS ON KNOWLEDGE AND DATA ENGINEERING, IEEE SERVICE CENTRE , LOS ALAMITOS , CA, US, vol. 33, no. 1, 29 July 2020 (2020-07-29), pages 14 - 27, XP011823747, ISSN: 1041-4347, [retrieved on 20201207], DOI: 10.1109/TKDE.2020.3012668
- QIN HUANG ET AL: "Transparent Downsampling Blockchain Algorithm", ARXIV.ORG, CORNELL UNIVERSITY LIBRARY, 201 OLIN LIBRARY CORNELL UNIVERSITY ITHACA, NY 14853, 5 November 2019 (2019-11-05), XP081525631

## Description

### BACKGROUND OF THE INVENTION

### 1. Technical Field

The present disclosure relates generally to a system for storing blockchain transaction data, and more particularly to technology for a distributed storage system for distributed storage of encoding chunks generated by encoding blockchain transaction data.

### 2. Description of the Related Art

Blockchain technology, which is drawing a lot of attention after Bitcoin emerged, is a protocol that enables secure transactions between network users without mediation by a trusted third party, such as a bank or the like. Although some of the users participating in the network may conduct malicious behavior (e.g., a double spending attack for trying to spend the same cryptocurrency twice, or the like), blockchain technology enables secure transactions using cryptographic technology. The key idea of blockchain technology is to make all users share a single unified ledger by agreement so that each of the users is able to verify the validity of a transaction through comparison with the ledger, thereby preventing abnormal transactions. The blockchain technology enables nodes to verify integrity through a Peer-to-Peer (P2P) network without depending on a trusted third party, such as a bank or the like, thereby skipping unnecessary processes incurring brokerage expenses paid to the third party.

Basically, blockchain is append-only technology in which only adding data is allowed and stored data cannot be removed, and maintains data integrity in such a way that all nodes have the same data. Accordingly, the storage capacity required by each of the nodes gradually increases over time, which acts as an obstacle that prevents many nodes lacking sufficient storage capacity from easily participating in the blockchain. For example, in August 2002, a large storage space of about 400 GB was required of a node that participates in the Bitcoin network as a full node, and a storage capacity of about 50 GB per year was additionally required of the node. Considering that it is essential for a large number of nodes to participate in the network in order to maintain decentralization, which is the core value of blockchain technology, it is necessary to reduce the size of data each node has to store.

Meanwhile, a distributed storage system is a system for storing large-size data across multiple nodes, each having a small storage capacity, in a distributed manner. In the distributed storage system, encoding technology is generally applied just in case some nodes are not accessible. Here, encoding technology is technology in which parity with a specific mathematical structure is added to original data such that the entire data can be read through the parity even when part of the data is not accessible.

Meanwhile, in order to solve a problem of a lack of blockchain storage space when blockchain transaction data is stored in a distributed manner, studies for applying the encoding technology used for a distributed storage system to the data to be stored have been conducted. When the encoding technology is applied, each node stores part of encoded data rather than all transaction data, whereby a burden of storage space on the node is reduced. Here, as the encoding technology, Reed-Solomon codes, fountain codes, and the like are taken into consideration. Fountain codes are a kind of erasure codes and are also called 'rateless erasure codes', and a potentially infinite number of encoding symbols may be generated from a given number of source symbols using the fountain codes.

Particularly in the blockchain system, frequent node joining/leaving occurs, and whenever the number of blockchain nodes is changed, existing technologies require a process of restoring original data and newly encoding the same, which leads to an increase in computation complexity. Likewise, when dynamic node-joining/leaving occurs, the conventional technologies using fountain codes also require complex operations in order for existing nodes to acquire transaction data assigned to a new node. Also, when blockchain transaction data is encoded and stored in a distributed manner, there is a disadvantage in that large communication and computation burdens are imposed when a client reads the transaction data.
ZHANG, LIHAO ET AL: "Speeding up block propagation in Bitcoin network: Uncoded and coded designs", COMPUTER NETWORKS, ELSEVIER, AMSTERDAM, NL, vol. 206, 22 January 2022 discloses new block propagation protocols for the peer-to-peer (P2P) network of the Bitcoin blockchain consisting of (i) replacing the existing store-and-forward compact-block relaying scheme with a cut-through compact-block relaying scheme and (ii) exploiting rateless erasure codes for P2P networks to increase the block-propagation efficiency.
SWANAND KADHE ET AL: "SeF: A Secure Fountain Architecture for Slashing Storage Costs in Blockchains", ARXIV.ORG, CORNELL UNIVERSITY LIBRARY, 201 OLIN LIBRARY CORNELL UNIVERSITY ITHACA, NY 14853, 28 June 2019 describes a blockchain architecture based on fountain codes, a class of erasure codes enabling any full node to encode validated blocks into a small number of coded blocks, thereby reducing its storage costs. In particular, a proposed Secure Fountain (SeF) architecture can achieve a trade-off between the storage savings per node and the boot-strap cost in terms of the number of (honest) storage-constrained nodes a new node needs to contact to recover the entire blockchain. QI, XIAODONG ET AL: "A Reliable Storage Partition for Permissioned Blockchain", IEEE TRANSACTIONS ON KNOWLEDGE AND DATA ENGINEERING, IEEE SERVICE CENTRE, LOS ALAMITOS , CA, US, vol. 33, no. 1, 29 July 2020 discloses a storage engine called BFT-Store to enhance storage scalability by integrating erasure coding with Byzantine Fault Tolerance (BFT) consensus protocol.

### SUMMARY OF THE INVENTION

An object of the present disclosure is to provide technology for distributed storage of blockchain transaction data, which is robust to a change in the number of blockchain nodes.

Another object of the present disclosure is to reduce a storage space burden on nodes (users) participating in a blockchain network based on encoding and to enable original data to be easily acquired.

A further object of the present disclosure is to maintain availability of transaction data with low computation complexity in spite of frequent node joining and leaving.

In order to accomplish the above objects, a method for storing blockchain transaction data according to the present disclosure includes selecting transaction blocks corresponding to an encoding group, generating at least one encoding chunk corresponding to each of participating nodes by performing fountain encoding on the transaction blocks, and storing the at least one encoding chunk corresponding to one of the participating nodes.

Here, the method for storing blockchain transaction data may be performed by an apparatus for storing blockchain transaction data.

Here, the method for storing blockchain transaction data may further include selecting at least one systematic transaction block from among the transaction blocks and storing the at least one systematic transaction block as a systematic transaction block set.

Here, among the transaction blocks, remaining transaction blocks excluding the systematic transaction block may be deleted.

Here, the at least one encoding chunk may be generated using an Encoding Vector Generator (EVG) that pseudo-randomly selects part of the transaction blocks based on identification information corresponding to each of the participating nodes.

Here, the at least one systematic transaction block may be selected using a Systematic Index Generator (SIG) that pseudo-randomly selects part of the transaction blocks based on the identification information corresponding to each of the participating nodes.

Here, the encoding vector generator and the systematic index generator may operate by further taking into account bandwidth information and storage capacity information corresponding to each of the participating nodes in addition to the identification information.

Here, the method for storing blockchain transaction data may further include storing a verifying set for verifying encoding chunks corresponding to other nodes, among the participating nodes.

Here, when a new node is added to the participating nodes, the previously stored at least one encoding chunk may be maintained without change, and only an encoding chunk corresponding to the new node may be newly generated and used to generate a verification value to be added to the verifying set.

Here, the method for storing blockchain transaction data may further include determining whether the number of participating nodes satisfies a reencoding condition and restoring the transaction blocks and again encoding the same when the reencoding condition is satisfied.

Here, the reencoding condition may be any one of a first condition for increasing the number of transaction blocks included in the encoding group in response to an increase in the number of participating nodes and a second condition for decreasing the number of transaction blocks included in the encoding group in response to a decrease in the number of participating nodes.

Also, an apparatus for storing blockchain transaction data according to an embodiment of the present disclosure includes one or more processors and executable memory for storing at least one program executed by the one or more processors.

Here, the at least one program selects transaction blocks corresponding to an encoding group, generates at least one encoding chunk corresponding to each of participating nodes by performing fountain encoding on the transaction blocks, and stores the at least one encoding chunk corresponding to at least one of the participating nodes.

Here, the at least one program may select at least one systematic transaction block from among the transaction blocks and store the at least one systematic transaction block as a systematic transaction block set.

Here, among the transaction blocks, remaining transaction blocks excluding the systematic transaction block may be deleted.

Here, the at least one encoding chunk may be generated using an Encoding Vector Generator (EVG) that pseudo-randomly selects part of the transaction blocks based on identification information corresponding to each of the participating nodes.

Here, the at least one systematic transaction block may be selected using a Systematic Index Generator (SIG) that pseudo-randomly selects part of the transaction blocks based on the identification information corresponding to each of the participating nodes.

Here, the at least one program may store a verifying set for verifying encoding chunks corresponding to other nodes, among the participating nodes.

### BRIEF DESCRIPTION OF THE DRAWINGS

The above and other objects, features, and advantages of the present disclosure will be more clearly understood from the following detailed description taken in conjunction with the accompanying drawings, in which:
FIG. 1 is a view illustrating the concept of a method for storing blockchain transaction data according to an embodiment of the present disclosure;
FIG. 2 is a view illustrating a process of generating k+m encoding chunks from k transaction blocks through a generator matrix of fountain codes;
FIG. 3 is a view illustrating the structures of blocks of a blockchain and groups generated by collecting the blocks;
FIG. 4 is a flowchart illustrating a method for storing blockchain transaction data according to an embodiment of the present disclosure;
FIG. 5 is a flowchart illustrating a method for generating blockchain transaction data according to an embodiment of the present disclosure;
FIG. 6 is a flowchart illustrating a method for performing reencoding when the number of nodes is dynamically changed; and
FIG. 7 is a block diagram illustrating a computer system configuration according to an embodiment of the present disclosure.

### DESCRIPTION OF THE PREFERRED EMBODIMENTS

The advantages and features of the present disclosure and methods of achieving them will be apparent from the following exemplary embodiments to be described in more detail with reference to the accompanying drawings. However, it should be noted that the present disclosure is not limited to the following exemplary embodiments, and may be implemented in various forms. Accordingly, the exemplary embodiments are provided only to disclose the present disclosure and to let those skilled in the art know the category of the present disclosure, and the present disclosure is to be defined based only on the claims. The same reference numerals or the same reference designators denote the same elements throughout the specification.

It will be understood that, although the terms "first," "second," etc. may be used herein to describe various elements, these elements are not intended to be limited by these terms. These terms are only used to distinguish one element from another element. For example, a first element discussed below could be referred to as a second element without departing from the present disclosure.

The terms used herein are for the purpose of describing particular embodiments only and are not intended to limit the present disclosure. As used herein, the singular forms are intended to include the plural forms as well, unless the context clearly indicates otherwise. It will be further understood that the terms "comprises," "comprising,", "includes" and/or "including," when used herein, specify the presence of stated features, integers, steps, operations, elements, and/or components, but do not preclude the presence or addition of one or more other features, integers, steps, operations, elements, components, and/or groups thereof.

Unless differently defined, all terms used herein, including technical or scientific terms, have the same meanings as terms generally understood by those skilled in the art to which the present disclosure pertains. Terms identical to those defined in generally used dictionaries should be interpreted as having meanings identical to contextual meanings of the related art, and are not to be interpreted as having ideal or excessively formal meanings unless they are definitively defined in the present specification.

Hereinafter, embodiments of the present disclosure will be described in detail with reference to the accompanying drawings. In the following description of the present disclosure, the same reference numerals are used to designate the same or similar elements throughout the drawings, and repeated descriptions of the same components will be omitted.

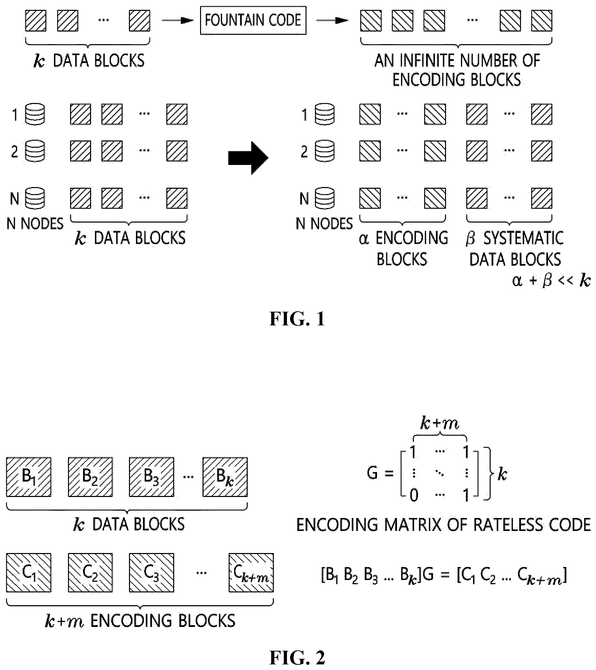

FIG. 1 is a view illustrating the concept of a method for storing blockchain transaction data according to an embodiment of the present disclosure.

Referring to FIG. 1, the difference between a general method for storing blockchain transaction data and a method for storing blockchain transaction data according to an embodiment of the present disclosure is apparently seen.

When k blockchain blocks containing transaction records are present, an existing blockchain system is configured such that every node stores all of the k blocks. In contrast, the method for storing blockchain transaction data according to an embodiment of the present disclosure reduces the storage capacity burden on the nodes in such a way that, after a plurality of encoding chunks (encoding blocks) is generated by performing fountain encoding on the k blocks, each node stores part of the encoding chunks.

In FIG. 1, node i stores αᵢ chunks, among the generated encoding chunks, and systematically stores βᵢ blocks, among the k original data blocks. Here, the numbers of encoding chunks stored by the respective nodes may be equal to each other or different from each other. Here, the numbers of systematic blocks stored by the respective nodes may be equal to each other or different from each other. For example, a node having high bandwidth and a high storage capacity may be assigned more systematic blocks.

When each of the nodes stores only the encoding chunk(s) and systematic block(s) assigned thereto rather than all of the data blocks, as described above, the storage capacity is reduced to about (αᵢ + βᵢ) / k times if the sizes of the hash values of the encoding chunks stored by other nodes and the size of block header data are approximated to be zero.

The present disclosure applies fountain encoding to blockchain transaction data and additionally stores the original transaction data in a systematic manner.

Here, 'storing data in a systematic manner' means storing the original data such that the desired data can be directly accessed without a decoding process. Accordingly, in the method for storing blockchain transaction data according to an embodiment of the present disclosure, each node stores part of encoding chunks, which are encoded with fountain codes, and also stores part of original transaction blocks.

Fountain codes are a kind of erasure codes, and a potentially infinite number of encoding symbols may be generated from a given number of source symbols using the fountain codes.

As illustrated in FIG. 1, in the method for storing blockchain transaction data according to an embodiment of the present disclosure, the blockchain transaction data to be encoded is partitioned into a preset number of data blocks (k data blocks), and the data blocks are encoded, whereby an infinite number of independent encoding chunks or encoding blocks may be generated. Here, the encoding chunks that are independent of each other mean that the method of generating one of the encoding chunks is unrelated to the methods of generating the others. The fact that independent encoding chunks can be generated using a given number of data blocks (k data blocks) means that, when a new participating node is present, the new participating node is able to calculate the encoding chunk stored thereby regardless of the already existing encoding chunks. Also, because an infinite number of encoding chunks can be generated due to the characteristic of fountain codes, the method for storing blockchain transaction data according to an embodiment of the present disclosure may work effectively in the situation in which new nodes frequently join the network. Part of the encoding chunks are stored in a distributed manner across blockchain nodes, whereby the storage capacity burden on each node may be reduced. Also, each node may systematically store part of the original data blocks in addition to the encoding chunk(s).

The method for storing blockchain transaction data according to an embodiment of the present disclosure may have two advantages by performing fountain-codes-based encoding on blockchain transaction data and additionally storing a systematic data block (or systematic data blocks) along with part of encoding chunks. First, the existing nodes may calculate encoded blockchain data corresponding to a new node with low complexity. Also, a client may acquire a transaction block with low complexity.

The encoding chunk(s) assigned to the new node may be the sum of part of the original data blocks. If all nodes store only encoding chunk(s) in the blockchain system to which fountain codes are applied, when a new node participates in the blockchain, a process of acquiring the original data blocks by decoding the encoding chunk(s) has to be performed in order to calculate the encoding chunk(s) corresponding to the new node. Accordingly, the system configured to store only the encoding chunk(s) incurs large communication and computation loads. In contrast, when systematic blocks are further stored, the encoding chunk(s) assigned to a new node may be acquired without a decoding process by receiving the systematic blocks from multiple nodes and forming the required original data, whereby communication and computation complexity may be decreased.

Also, in the method for storing blockchain transaction data according to an embodiment of the present disclosure, when a client reads data, the systematic blocks stored in multiple nodes are used first, whereby the data may be read quickly and directly without a decoding process for acquiring the original data. Only when desired data cannot be generated from only the systematic blocks may the encoding chunks of fountain codes be used, whereby the desired data may be read through decoding using the encoding chunks.

FIG. 2 is a view illustrating a process of generating k+m encoding chunks from k transaction blocks through a generator matrix of fountain codes.

Referring to FIG. 2, it can be seen that k+m encoding chunks (encoding blocks) are generated by applying fountain encoding to k transaction blocks,

In FIG. 2, m may be an arbitrary non-negative integer, and each column vector of the generator matrix may be independent of the other column vectors. Here, when data blocks have different sizes in the encoding process, the sizes of the data blocks may be made equal through zero-padding.

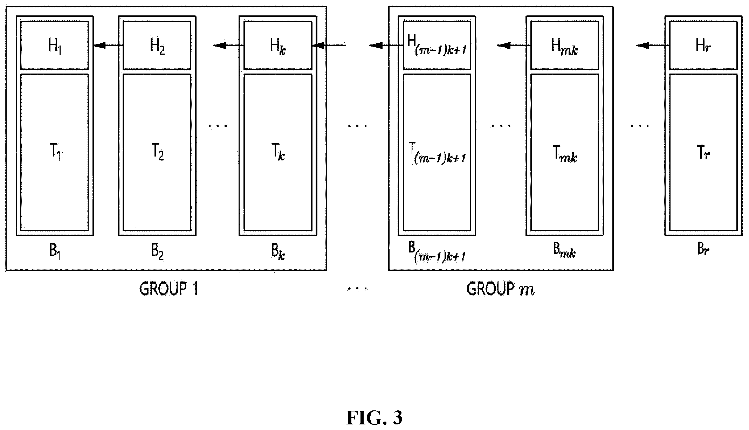

FIG. 3 is a view illustrating the structures of blocks of a blockchain and groups generated by collecting the blocks.

Referring to FIG. 3, it can be seen that each of blocks B₁, B₂, ..., Bᵣ constituting the blockchain is configured with a block header Hᵢ containing meta information about the block and a block body Tᵢ including transaction records (i being a natural number equal to or greater than 1 and equal to or less than r). That is, the example illustrated in FIG. 3 may be understood as a blockchain to which fountain encoding is not applied, and Bᵢ, which is the i-th block of the blockchain, is configured with a transaction block Tᵢ, containing transaction data, and a block header Hᵢ, containing meta information about the block. The size of the block header and the size of the hash value of an encoding chunk are much smaller than the size of the block, so the block header and the hash value are not significant in terms of a storage capacity.

Each group is formed by collecting k blocks, and for each group, an encoding process is performed on the block bodies (transaction blocks) in the group. Here, when the transaction blocks stored in the respective blocks have different sizes, all of the transaction blocks in the group may be made have the same size using a zero-padding technique. For example, encoding may be performed on the transaction blocks T₁, T₂, ..., Tₖ in group 1 after the sizes of the transaction blocks T₁, T₂, ..., Tₖ are set to the same size.

In the present disclosure, the reasons for using fountain encoding are as follows. First, because each encoding chunk is independently generated without being affected by other encoding chunks, when the number of nodes in a blockchain system is changed, there is no need to reencode the encoding chunks of the existing nodes so as to be suitable for the system in which the number of nodes is changed. Reencoding requires large amounts of communication resources for reading information from a plurality of nodes and also requires large amounts of computing resources because fountain encoding using a new parameter has to be again performed. Therefore, the blockchain system to which encoding based on fountain codes is applied is resource-efficient. Also, because an infinite number of encoding chunks can be generated through fountain codes, even though a large number of new nodes participates in the blockchain system, encoding chunks assigned to the corresponding new nodes may be generated.

Also, the reasons for additionally storing original transaction data (transaction blocks) in a systematic manner in the present disclosure are as follows. First, existing nodes are capable of calculating the encoding chunk assigned to a new node with low complexity. The existing nodes go through a process of calculating the encoding chunk assigned to the new node and storing the hash value of the encoding chunk as proof in order to validate the encoding chunk stored by the new node. Here, the encoding chunk may be the sum of part of the original transaction blocks. Here, part of the original transaction blocks for generating the encoding chunk may be pseudo-randomly selected. Accordingly, when the original data can be directly accessed through the systematically stored data, the encoding chunk may be acquired with low communication/computation complexity. When no original transaction block is stored at all, large amounts of communication and computation resources are consumed because a process of reconstructing transaction data from the encoding chunks has to be performed. Also, when the original transaction data is stored in a systematic manner, a client may acquire a transaction block with very low complexity. When the client requests a specific transaction block, the transaction block is requested first from the node that directly stores the corresponding block and is returned to the client. Here, whether the data is authentic may be verified using the hash value of the block header, which is managed as metadata.

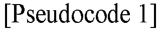

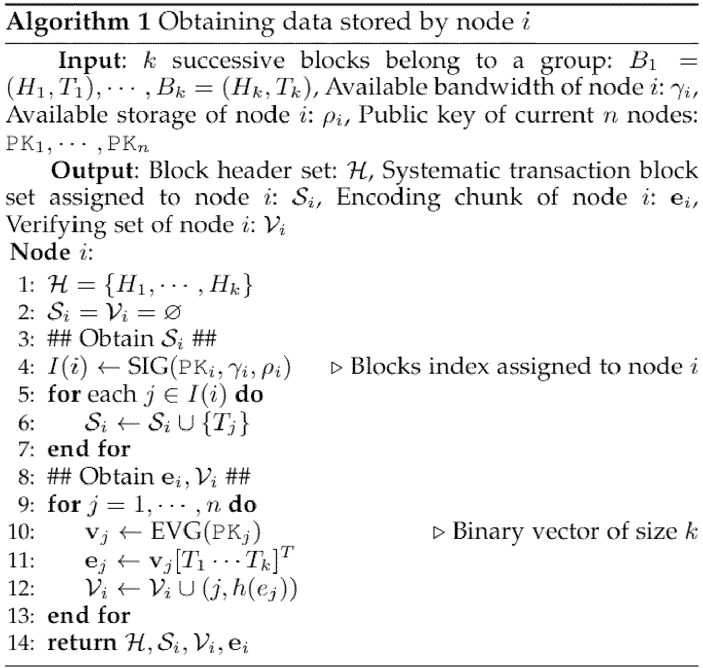

Pseudocode 1 illustrates a process in which node i stores data through encoding in group m.

Referring to pseudocode 1, a process of calculating information stored by each node of a blockchain system can be seen. In the example of pseudocode 1, an embodiment of the present disclosure is described based on the case in which every node stores one encoding chunk, that is, αᵢ = 1, but each node may alternatively store multiple encoding chunks.

In the process described through pseudocode 1, k successive transaction blocks belonging to group m, the bandwidth resource and storage capacity resource of node i, and the public keys (node identification information) of participating nodes participating in the system are received as input, and a block header set H, a systematic block set Sᵢ, an encoding chunk eᵢ, and a verifying set Vᵢ required to verify encoding chunks received from other nodes are output as data node i has to store. That is, in the process of pseudocode 1, k successive blocks belonging to a specific group, the bandwidth and storage resources of node i, and the public keys of the nodes participating in the system are received as input, and data stored by node i in the corresponding group is output. In pseudocode 1, H is a block header set, Sᵢ is the systematic block set assigned to node i, eᵢ is the encoding chunk assigned to node i, and Vᵢ is a verifying set containing the hash values of the encoding chunks to be stored by other nodes.

Referring to pseudocode 1, first, the block headers Hₗ, ..., Hₖ of all of the transaction blocks in a group are stored.

Also, each of the systematic block set and the verifying set is initialized to an empty set.

Also, βᵢ indices corresponding to the systematic transaction blocks assigned to node i are generated using a Systematic Index Generator (SIG). For example, when the first and second blocks of the k transaction blocks are selected as the transaction blocks for node i, indices 0 and 1 may be generated.

Here, the systematic index generator may receive the identification information (public key) of node i, the bandwidth resource γᵢ of node i, and the storage capacity resource ρᵢ of node i as input, and may output βᵢ indices corresponding to the systematic transaction blocks assigned to node i. Here, node i may store only the transaction blocks corresponding to the output indices in a systematic manner and delete the remaining transaction blocks. Here, the systematic index generator may generate indices such that the greater the amounts of the bandwidth resources and capacity resources of node i, the greater the number of systematic transaction blocks.

When generation of the indices of the systematic transaction blocks is completed, the systematic transaction blocks corresponding to the generated indices are stored in the systematic block set Sᵢ.

Also, a binary vector having a size of k may be generated for each of n participating nodes using an Encoding Vector Generator (EVG). Here, the binary vector may be configured such that the value of an element is set to 1 for the transaction block used for encoding but is set to 0 for the transaction block that is not used for encoding. For example, when only the first block of the k blocks is used to generate an encoding chunk of node i, a binary vector {1, 0, ..., 0} may be generated.

Here, the encoding vector generator receives the identification information (public key) of node j as input and generates a binary vector vⱼ having a length of k in which each element is 0 or 1 (j being a natural number equal to or greater than 1 and equal to or less than n). The generated binary vector is used to generate an encoding chunk eᵢ assigned to node j by calculating an inner product with the transaction block. Node i hashes the respective encoding chunks assigned to the participating nodes other than node i using a hash function h and stores the result values of hashing by adding the same to the verifying set Vᵢ.

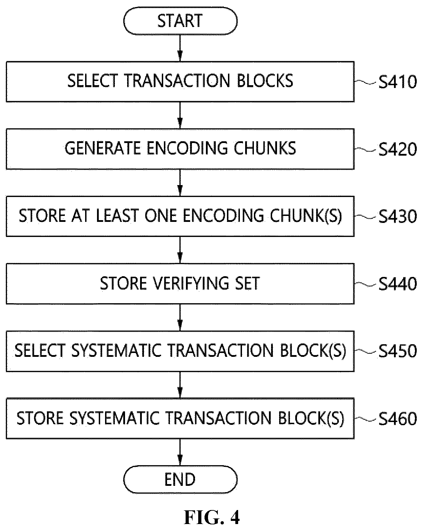

FIG. 4 is a flowchart illustrating a method for storing blockchain transaction data according to an embodiment of the present disclosure.

Referring to FIG. 4, in the method for storing blockchain transaction data according to an embodiment of the present disclosure, transaction blocks corresponding to an encoding group are selected at step S410.

Also, in the method for storing blockchain transaction data according to an embodiment of the present disclosure, at least one encoding chunk corresponding to each of participating nodes is generated by performing fountain encoding on the transaction blocks at step S420.

Here, the at least one encoding chunk may be generated using an Encoding Vector Generator (EVG) that pseudo-randomly selects part of the transaction blocks based on identification information corresponding to each of the participating nodes.

Also, in the method for storing blockchain transaction data according to an embodiment of the present disclosure, the at least one encoding chunk corresponding to one of the participating nodes is stored at step S430.

Also, in the method for storing blockchain transaction data according to an embodiment of the present disclosure, a verifying set for verifying the encoding chunks corresponding to the other ones of the participating nodes is stored at step S440.

Also, in the method for storing blockchain transaction data according to an embodiment of the present disclosure, at least one systematic transaction block is selected from among the transaction blocks at step S450.

Here, the at least one systematic transaction block may be selected using a Systematic Index Generator (SIG) that pseudo-randomly selects part of the transaction blocks based on identification information corresponding to each of the participating nodes.

Here, the encoding vector generator and the systematic index generator may operate by further taking into account bandwidth information and storage capacity information corresponding to each of the participating nodes in addition to the identification information.

Also, in the method for storing blockchain transaction data according to an embodiment of the present disclosure, the at least one systematic transaction block is stored as a systematic transaction block set at step S460.

Here, among the transactions blocks, the remaining transaction blocks excluding the systematic transaction block may be deleted.

Here, when a new node is added to the participating nodes, the previously stored at least one encoding chunk is maintained without change, and only an encoding chunk corresponding to the new node may be newly generated and used to generate a verification value to be added to the verifying set.

Although not explicitly illustrated in FIG. 4, the method for storing blockchain transaction data according to an embodiment of the present disclosure may further include determining whether the number of participating nodes satisfies a reencoding condition and again encoding the transaction blocks after restoring the same when the reencoding condition is satisfied.

Here, the reencoding condition may be any one of a first condition for increasing the number of transaction blocks included in the encoding group in response to an increase in the number of participating nodes and a second condition for decreasing the number of transaction blocks included in the encoding group in response to a decrease in the number of participating nodes.

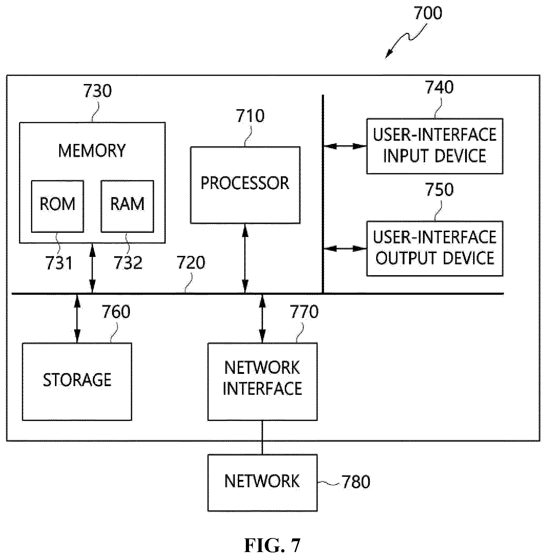

The steps illustrated in FIG. 4 may be performed by the apparatus for storing blockchain transaction data illustrated in FIG. 7.

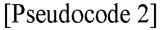

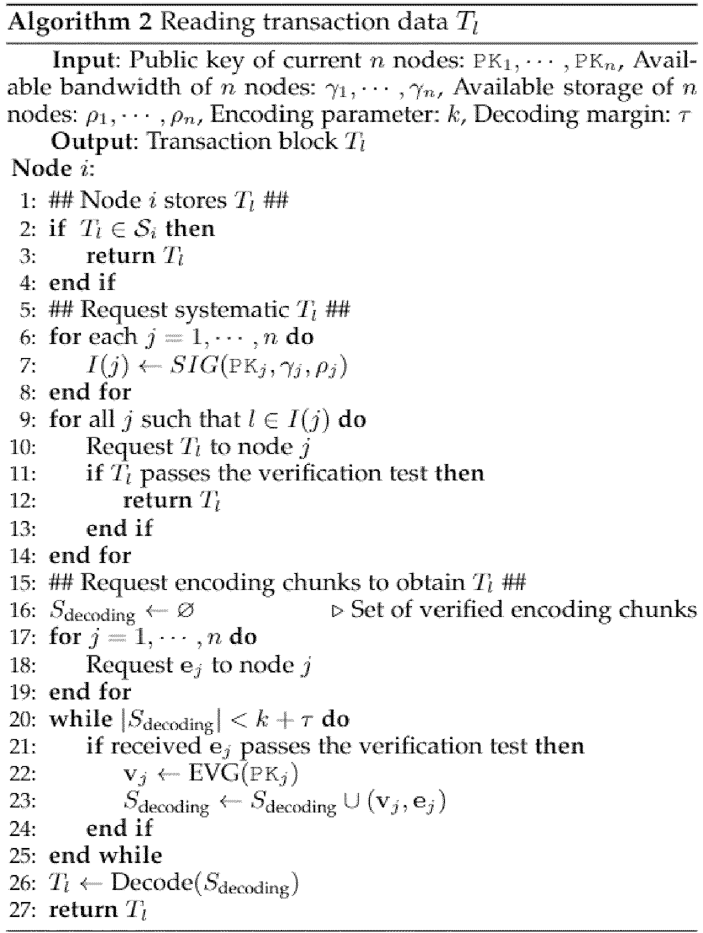

Pseudocode 2 illustrates a process in which node i reads transaction block Tᵢ.

First, when block Tₗ is included in the systematic block set of node i, Tₗ may be immediately read.

Otherwise, a node that stores Tₗ in a systematic manner is searched for, and the data is requested from the corresponding node. Here, whether Tₗ is authentic may be verified using the hash value stored in the block header.

If a node storing Tₗ in a systematic manner is not present, encoding chunk(s) are requested from all of the other participating nodes, and Tₗ is obtained through a decoding process using the received (k + τ) verified encoding chunks (τ being a decoding margin). Here, whether the encoding chunk(s) are authentic may be verified through the verifying set stored by node i.

In the process of pseudocode 2, because each of the nodes has not all transaction blocks, when a specific node intends to access a specific transaction block, it may need the help of other participating nodes. First, when the corresponding node stores the original data block Tₗ, it may immediately read the corresponding data block. Otherwise, the specific node requests the systematic data block Tₗ from another participating node (or other participating nodes) having the corresponding block and reads the same. When none of the participating nodes has the systematic data block Tₗ, encoding chunks are requested from multiple nodes, and Tₗ may be acquired through a decoding process using the (k + τ) verified encoding chunks. The systematic block(s) (systematic transaction block(s)) and encoding chunk(s) provided from other nodes may be verified using the block header set H and the verifying set Vᵢ.

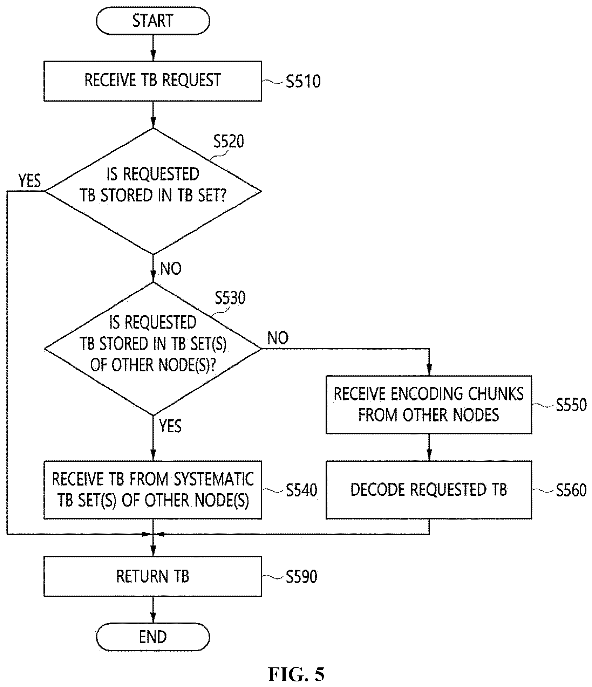

FIG. 5 is a flowchart illustrating a method for generating blockchain transaction data according to an embodiment of the present disclosure.

Referring to FIG. 5, in the method for generating blockchain transaction data according to an embodiment of the present disclosure, a request for a transaction block is received at step S510.

Also, in the method for generating blockchain transaction data according to an embodiment of the present disclosure, whether the requested transaction block is included in a systematic transaction block set is determined at step S520.

When it is determined at step S520 that the requested transaction block is not included in the systematic transaction block set, whether the requested transaction block is included in the systematic transaction block set of at least one of additional participating nodes is determined at step S530.

At step S530, whether the requested transaction block is included in the systematic transaction block set of at least one of the additional participating nodes may be determined using a Systematic Index Generator (SIG) that pseudo-randomly selects part of the transaction blocks based on identification information corresponding to each of the additional participating nodes.

When it is determined at step S520 that the requested transaction block is included in the systematic transaction block set, the requested transaction block is returned by being read from the systematic transaction block set at step S590.

When it is determined at step S530 that the requested transaction block is included in the systematic transaction block set of at least one of the additional participating nodes, the requested transaction block is provided from the node having the requested transaction block, among the additional participating nodes, at step S540 in the method for generating blockchain transaction data according to an embodiment of the present disclosure.

After step S540, the requested transaction block is returned at step S590.

When it is determined at step S530 that the requested transaction block is not included in the systematic transaction block set of any of the additional participating nodes, encoding chunks generated by performing fountain encoding on the transaction blocks are received from at least part of the additional participating nodes at step S550.

In the method for generating blockchain transaction data according to an embodiment of the present disclosure, after step S550, the encoding chunks are decoded, whereby the requested transaction block is restored at step S560.

In the method for generating blockchain transaction data according to an embodiment of the present disclosure, after step S560, the requested transaction block is returned at step S590.

The steps illustrated in FIG. 5 may be performed by the apparatus for generating blockchain transaction data illustrated in FIG. 7.

The methods for storing and generating blockchain transaction data according to an embodiment of the present disclosure are required to maintain data availability even when some of nodes participating a blockchain system are Byzantine nodes conducting malicious behavior. Here, availability means the ability to restore all transactions using only information stored in honest nodes that operate normally. When it is assumed that a maximum of f failed nodes (including Byzantine nodes and honest nodes that cannot operate normally) is present in a system configured with n nodes, it must be possible to restore all transactions using only the (n - f) honest nodes operating normally in order to ensure availability.

When fountain codes are used, each encoding chunk is independently generated, and the probability that the blockchain system satisfies availability cannot be 100% (1). However, if the probability is equal to or greater than 1- δ for a very small value δ, it may be assumed that availability is satisfied. Here, 10⁻¹² may be considered as the value of δ.

When the original transaction data is restored, the maximum number of available trusted encoding chunks becomes n - f by excluding the f failed nodes from a total of n nodes. In order to reconstruct the original transaction blocks from the (n - f) encoding chunks with a very high probability, the number of transaction blocks included in each group, that is, k, is set to be less than n - f such that k = n - f - τ (τ ≥ 0) is satisfied. When a Gaussian-elimination decoder is used together with the method of pseudocode 1, availability at the level of δ = 10⁻¹² may be satisfied using a small τ value regardless of the value of n.

When a node is added to a blockchain system, the new node first acquires all of transaction records. Here, the new node receives systematic transaction blocks from other nodes first, thereby acquiring all of the transaction records without a decoding process. When access to some systematic transaction blocks is impossible, the encoding chunks of the corresponding group are received from a plurality of nodes, after which the transaction records to which access is impossible may be acquired through a decoding process. After it acquires all of the transaction records, the new node forms a state database of the blockchain using the transaction records. Here, the new node keeps only the ledger information to be stored thereby and deletes the remaining data using the method of pseudocode 1. Meanwhile, node i, which is an existing node, is required to additionally store the hash value of the encoding chunk stored by the new node in a verifying set Vᵢ and to verify whether the encoding chunk is authentic. Node i may acquire the encoding chunk assigned to the new node using the public key of the new node and an Encoding Vector Generator (EVG). Here, the systematic block(s) essential to calculate the encoding chunk assigned to the new node are requested first, whereby the required data may be read while minimizing communication and computation burdens.

When a large number of nodes is added, reencoding in which, after all nodes restore the original blocks, fountain encoding is applied to the restored original blocks using a new parameters, and the encoding chunk(s) to be assigned to the respective nodes are newly set may be performed in order to improve the storage capacity efficiency of the blockchain system.

When a large number of nodes leaves the blockchain network, an availability problem in which part of the original transaction data cannot be acquired using only the data of honest nodes may occur. When it is determined that the probability of satisfying availability is less than 1- δ because the number of nodes further decreases in the system, the system performs reencoding based on the current number of nodes, thereby always maintaining the probability of satisfying availability to be equal to or greater than 1- δ.

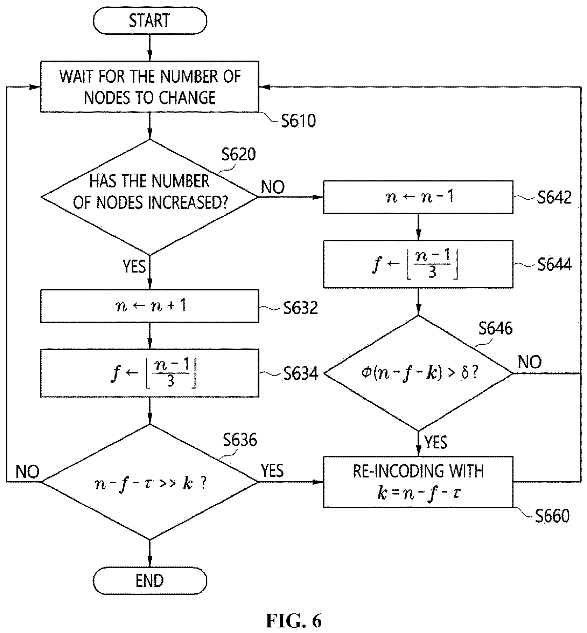

FIG. 6 is a flowchart illustrating a method for performing reencoding when the number of nodes is dynamically changed.

In FIG. 6, n denotes the current number of nodes of a blockchain system, $f = \left⌊\left(n-1\right)/3\right⌋$ denotes the permissible maximum number of failed nodes, k denotes the number of transaction blocks included in a group, τ denotes a constant value that is fixed in order to satisfy the availability of the system, and φ (n - f - k) denotes the probability that the blockchain system cannot satisfy the availability (the probability that transaction data cannot be restored using only honest nodes).

When the number of blockchain nodes is n first, the number of transaction blocks included in a group is set to k = n - f - τ, and encoding is performed.

Referring to FIG. 6, in the method for performing reencoding, a change in the number of nodes is waited for at step S610.

Also, in the method for performing reencoding, whether a node is added is determined at step S620.

When it is determined at step S620 that a node is added, the number of nodes, n, is increased at step S632.

After step S632, the permissible maximum number of failed nodes, f, is updated at step S634.

After step S634, whether n - f - τ is much greater than k is determined at step S636.

Here, whether n - f - τ is much greater than k may be determined by comparing a result value acquired by applying a preset function to k with n - f - τ. Here, whether n - f - τ is much greater than k may be determined by comparing k multiplied by a preset value with n - f - τ. Here, whether n - f - τ is much greater than k may be determined by comparing the sum of k and a present value with n - f - τ.

That is, when n - f - τ is much greater than k due to a large number of nodes added to the system, this indicates that the storage spaces of the nodes are inefficiently used.

When it is determined at step S636 that n - f - τ is not much greater than k, the process of the method for performing reencoding goes back to step S610, whereby a change in the number of nodes is waited for.

When it is determined at step S636 that n - f - τ is much greater than k, k is updated and reencoding is performed using the new value of k at step S660 in the method for performing reencoding.

That is, when n - f - τ is much greater than k due to a large number of nodes added to the system, the original data blocks are restored and reencoding is performed using the new value of k in order to improve the storage efficiency of the nodes.

When it is determined at step S620 that the number of nodes decreases, n, which denotes the number of nodes, is decreased at step S642.

After step S642, f, which is the permissible maximum number of failed nodes, is updated at step S644.

After step S644, whether φ (n - f - k), which is the probability that availability is not satisfied, is greater than a very small threshold value, δ, is determined at step S646.

That is, when a large number of nodes is deleted, an availability problem in which the original transaction block(s) cannot be restored using only the information stored in honest nodes may occur, and it is necessary to prevent this problem.

When it is determined at step S646 that φ (n - f - k), which is the probability that availability is not satisfied, is not greater than the very small threshold value, δ, the process of the method for performing reencoding goes back to step S610, whereby a change in the number of nodes is waited for.

When it is determined at step S646 that φ (n - f - k), which is the probability that availability is not satisfied, is greater than the very small threshold value, δ, the value of k is updated and reencoding is performed using the new value of k at step S660 in the method for performing reencoding.

That is, when an availability problem in which the original transaction block(s) cannot be restored using only the information stored in honest nodes because a large number of nodes is deleted from the system may occur, the original data blocks are restored and reencoding is performed using the new value of k in order to ensure availability.

FIG. 7 is a block diagram illustrating a computer system configuration according to an embodiment of the present disclosure.

The apparatus for storing blockchain transaction data, the apparatus for generating blockchain transaction data, the nodes constituting a blockchain, and the client according to an embodiment may be implemented in a computer system 700 including a computer- readable recording medium.

The computer system 700 may include one or more processors 710, memory 730, a user-interface input device 740, a user-interface output device 750, and storage 760, which communicate with each other via a bus 720. Also, the computer system 700 may further include a network interface 770 connected to a network 780. The processor 710 may be a central processing unit or a semiconductor device for executing a program or processing instructions stored in the memory 730 or the storage 760. The memory 730 and the storage 760 may be storage media including at least one of a volatile medium, a nonvolatile medium, a detachable medium, a non-detachable medium, a communication medium, or an information delivery medium, or a combination thereof. For example, the memory 730 may include ROM 731 or RAM 732.

Here, at least one program may be recorded in the memory 730.

Here, the processor 710 may execute the program. Here, the program may select transaction blocks corresponding to an encoding group, generate at least one encoding chunk corresponding to each of participating nodes by performing fountain encoding on the transaction blocks, and store the at least one encoding chunk corresponding to one of the participating nodes.

Here, the at least one program may select at least one systematic transaction block from among the transaction blocks and store the at least one systematic transaction block as a systematic transaction block set.

Here, among the transaction blocks, the remaining transaction blocks excluding the systematic transaction block may be deleted.

Here, the at least one encoding chunk may be generated using an Encoding Vector Generator (EVG) that pseudo-randomly selects part of the transaction blocks based on identification information corresponding to each of the participating nodes.

Here, the at least one systematic transaction block may be selected using a Systematic Index Generator (SIG) that pseudo-randomly selects part of the transaction blocks based on the identification information corresponding to each of the participating nodes.

Here, the encoding vector generator and the systematic index generator may operate by further taking into account bandwidth information and storage capacity information corresponding to each of the participating nodes in addition to the identification information.

Here, the at least one program may store a verifying set for verifying encoding chunks corresponding to the other ones of the participating nodes.

Here, when a new node is added to the participating nodes, the previously stored at least one encoding chunk is maintained without change, and only an encoding chunk corresponding to the new node may be newly generated and used to generate a verification value to be added to the verifying set.

Here, the at least one program may determine whether the number of participating nodes satisfies a reencoding condition, and may restore the transaction blocks and again encode the same when the reencoding condition is satisfied.

Here, the reencoding condition may be any one of a first condition for increasing the number of transaction blocks included in the encoding group in response to an increase in the number of participating nodes and a second condition for decreasing the number of transaction blocks included in the encoding group in response to a decrease in the number of participating nodes.

According to the present disclosure, a storage capacity burden on blockchain nodes may be reduced, and when nodes frequently join and leave a blockchain system to which encoding technology is applied, decoding and reencoding processes having large communication and computation loads may be reduced.

Also, according to the present disclosure, data stored by a new node that newly participates in a blockchain may be acquired with low communication and computation complexity in a blockchain system in which dynamic node-joining/leaving is allowed, and a client may acquire a desired transaction block with low computation complexity.

Also, according to the present disclosure, because the storage capacity required of each node is reduced, a large number of nodes is able to participate in a network, and this is an essential factor for maintaining decentralization, which is the core value of blockchain.

As described above, the method for storing blockchain transaction data, the method for generating blockchain transaction data, and the apparatus therefor according to the present disclosure are not limitedly applied to the configurations and operations of the above-described embodiments, but all or some of the embodiments may be selectively combined and configured, so the embodiments may be modified in various ways.

The invention is defined in the independent claims. Advantageous features are described in the dependent claims.

## Claims

1. A method for storing blockchain transaction data, performed by an apparatus for storing blockchain transaction data, comprising:
selecting transaction blocks corresponding to an encoding group;
generating at least one encoding chunk corresponding to each of participating nodes by performing fountain encoding on the transaction blocks;
storing the at least one encoding chunk corresponding to one of the participating nodes;
selecting at least one systematic transaction block from among the transaction blocks; and
storing the at least one systematic transaction block as a systematic transaction block set such that the systematic transaction block can be directly accessed without a decoding process;
wherein among the transaction blocks, remaining transaction blocks excluding the systematic transaction block are deleted.

2. The method of claim 1, wherein the at least one encoding chunk is generated using an Encoding Vector Generator, EVG, that pseudo-randomly selects part of the transaction blocks based on identification information corresponding to each of the participating nodes.

3. The method of claim 2, wherein the at least one systematic transaction block is selected using a Systematic Index Generator, SIG, that pseudo-randomly selects part of the transaction blocks based on the identification information corresponding to each of the participating nodes.

4. The method of claim 3, wherein the encoding vector generator and the systematic index generator operate by further taking into account bandwidth information and storage capacity information corresponding to each of the participating nodes in addition to the identification information.

5. The method of claim 1, further comprising:
storing a verifying set for verifying encoding chunks corresponding to other nodes, among the participating nodes.

6. The method of claim 5, wherein, when a new node is added to the participating nodes, the previously stored at least one encoding chunk is maintained without change, and only an encoding chunk corresponding to the new node is newly generated and used to generate a verification value to be added to the verifying set.

7. The method of claim 1, further comprising:
determining whether a number of participating nodes satisfies a reencoding condition; and
restoring the transaction blocks and again encoding the transaction blocks when the reencoding condition is satisfied.

8. The method of claim 7, wherein the reencoding condition is any one of a first condition for increasing a number of transaction blocks included in the encoding group in response to an increase in the number of participating nodes and a second condition for decreasing the number of transaction blocks included in the encoding group in response to a decrease in the number of participating nodes.

9. An apparatus for storing blockchain transaction data, comprising:
one or more processors; and
executable memory for storing at least one program executed by the one or more processors,
wherein the at least one program selects transaction blocks corresponding to an encoding group, generates at least one encoding chunk corresponding to each of participating nodes by performing fountain encoding on the transaction blocks, and stores the at least one encoding chunk corresponding to one of the participating nodes,
wherein the at least one program selects at least one systematic transaction block from among the transaction blocks and stores the at least one systematic transaction block as a systematic transaction block set such that the systematic transaction block can be directly accessed without a decoding process, and
wherein among the transaction blocks, remaining transaction blocks excluding the systematic transaction block are deleted.

## Patentansprüche

1. Verfahren zum Speichern von Blockchain-Transaktionsdaten, das von einer Vorrichtung zum Speichern von Blockchain-Transaktionsdaten durchgeführt wird, umfassend:
Auswählen von Transaktionsblöcken, die einer Codierungsgruppe entsprechen;
Erzeugen mindestens eines Codierungsblocks, der jedem der teilnehmenden Knoten entspricht, durch Ausführen einer Fountain-Codierung an den Transaktionsblöcken;
Speichern des mindestens einen Codierungsblocks, der einem der teilnehmenden Knoten entspricht;
Auswählen mindestens eines systematischen Transaktionsblocks aus den Transaktionsblöcken; und
Speichern des mindestens einen systematischen Transaktionsblocks als einen Satz systematischer Transaktionsblöcke, so dass auf den systematischen Transaktionsblock ohne einen DeCodierungsprozess direkt zugegriffen werden kann,
wobei unter den Transaktionsblöcken die verbleibenden Transaktionsblöcke mit Ausnahme des systematischen Transaktionsblocks gelöscht werden.

2. Verfahren nach Anspruch 1, wobei der mindestens eine Codierungsblock unter Verwendung eines Codierungsvektorgenerators (EVG) erzeugt wird, der einen Teil der Transaktionsblöcke auf der Grundlage von Identifikationsinformationen, die jedem der teilnehmenden Knoten entsprechen, pseudozufällig auswählt.

3. Verfahren nach Anspruch 2, wobei der mindestens ein systematischer Transaktionsblock unter Verwendung eines Systematischen-Index-Generators (SIG) ausgewählt wird, der einen Teil der Transaktionsblöcke auf der Grundlage der Identifikationsinformationen, die jedem der teilnehmenden Knoten entsprechen, pseudozufällig auswählt.

4. Verfahren nach Anspruch 3, wobei der Codierungsvektor-Generator und der Systematische Index-Generator so arbeiten, dass sie zusätzlich zu den Identifikationsinformationen auch Bandbreiteninformationen und Speicherkapazitätsinformationen berücksichtigen, die jedem der teilnehmenden Knoten entsprechen.

5. Verfahren nach Anspruch 1, das ferner umfasst:
das Speichern eines Verifizierungssatzes zur Verifizierung von Codierungsblöcken, die anderen Knoten unter den teilnehmenden Knoten entsprechen.

6. Verfahren nach Anspruch 5, wobei, wenn ein neuer Knoten zu den teilnehmenden Knoten hinzugefügt wird, der zuvor gespeicherte mindestens eine Codierungsblock unverändert beibehalten wird und nur ein dem neuen Knoten entsprechender Codierungsblock neu erzeugt und verwendet wird, um einen Verifizierungswert zu erzeugen, der dem Verifizierungssatz hinzugefügt wird.

7. Verfahren nach Anspruch 1, das ferner umfasst:
Feststellen, ob eine Anzahl von teilnehmenden Knoten eine Wiedercodierungsbedingung erfüllt; und
Wiederherstellen der Transaktionsblöcke und erneutes Kodieren der Transaktionsblöcke, wenn die Wiedercodierungsbedingung erfüllt ist.

8. Verfahren nach Anspruch 7, wobei die Wiedercodierungsbedingung entweder eine erste Bedingung zum Erhöhen einer Anzahl von Transaktionsblöcken, die in der Codierungsgruppe enthalten sind, als Reaktion auf eine Zunahme der Anzahl der teilnehmenden Knoten oder eine zweite Bedingung zum Verringern der Anzahl von Transaktionsblöcken, die in der Codierungsgruppe enthalten sind, als Reaktion auf eine Abnahme der Anzahl der teilnehmenden Knoten ist.

9. Vorrichtung zum Speichern von Blockchain-Transaktionsdaten, umfassend:
einen oder mehrere Prozessoren; und
einen ausführbaren Speicher zum Speichern mindestens eines Programms, das von dem einen oder den mehreren Prozessoren ausgeführt wird,
wobei das mindestens eine Programm Transaktionsblöcke auswählt, die einer Codierungsgruppe entsprechen, durch Ausführen einer Fountain-Codierung an den Transaktionsblöcken mindestens einen Codierungsblock erzeugt, der jedem der teilnehmenden Knoten entspricht, und den mindestens einen Codierungsblock speichert, der einem der teilnehmenden Knoten entspricht,
wobei das mindestens eine Programm mindestens einen systematischen Transaktionsblock aus den Transaktionsblöcken auswählt und den mindestens einen systematischen Transaktionsblock als einen Satz systematischer Transaktionsblöcke so speichert, dass auf den systematischen Transaktionsblock ohne einen Decodierungsprozess direkt zugegriffen werden kann, und
wobei unter den Transaktionsblöcken die verbleibenden Transaktionsblöcke mit Ausnahme des systematischen Transaktionsblocks gelöscht werden.

## Revendications

1. Procédé de stockage de données de transactions de chaîne de blocs, mis en œuvre par un appareil de stockage de données de transactions de chaîne de blocs, comprenant les étapes consistant à :
sélectionner des blocs de transactions correspondant à un groupe d'encodage ;
générer au moins un segment d'encodage correspondant à chacun des nœuds participants en appliquant un encodage fontaine aux blocs de transactions ;
stocker l'au moins un segment d'encodage correspondant à l'un des nœuds participants ;
sélectionner au moins un bloc de transactions systématique parmi les blocs de transactions ;
et
stocker l'au moins un bloc de transaction systématique sous la forme d'un ensemble de blocs de transaction systématiques, de telle sorte que le bloc de transaction systématique soit directement accessible sans processus de décodage ;
où, parmi les blocs de transaction, des blocs de transaction restants, à l'exclusion du bloc de transaction systématique, sont supprimés.

2. Procédé de la revendication 1, où l'au moins un segment d'encodage est généré à l'aide d'un générateur de vecteurs d'encodage (EVG) qui sélectionne de manière pseudo-aléatoire une partie des blocs de transaction en fonction d'informations d'identification correspondant à chacun des nœuds participants.

3. Procédé de la revendication 2, où l'au moins un bloc de transaction systématique est sélectionné à l'aide d'un générateur d'index systématique (SIG) qui sélectionne de manière pseudo-aléatoire une partie des blocs de transaction en fonction des informations d'identification correspondant à chacun des nœuds participants.

4. Procédé de la revendication 3, où le générateur de vecteur d'encodage et le générateur d'index systématique fonctionnent en prenant également en compte des informations de bande passante et des informations de capacité de stockage correspondant à chacun des nœuds participants, en plus des informations d'identification.

5. Procédé de la revendication 1, comprenant en outre :
le stockage, parmi les nœuds participants, d'un ensemble de vérification pour vérifier des segments d'encodage correspondant à d'autres nœuds.

6. Procédé de la revendication 5, où, lorsqu'un nouveau nœud est ajouté aux nœuds participants, l'au moins un segment d'encodage précédemment stocké est conservé tel quel, et seul un segment d'encodage correspondant au nouveau nœud est généré et utilisé pour générer une valeur de vérification à ajouter à l'ensemble de vérification.

7. Procédé de la revendication 1, comprenant en outre :
le fait de déterminer si un nombre de nœuds participants satisfait ou non à une condition de réencodage ; et
la restauration des blocs de transaction et le réencodage des blocs de transaction lorsque la condition de réencodage est satisfaite.

8. Procédé de la revendication 7, où la condition de réencodage est l'une parmi une première condition pour augmenter un nombre de blocs de transaction inclus dans le groupe d'encodage en réponse à une augmentation du nombre de nœuds participants, et une deuxième condition pour diminuer le nombre de blocs de transaction inclus dans le groupe d'encodage en réponse à une diminution du nombre de nœuds participants.

9. Dispositif destiné au stockage de données de transactions de chaîne de blocs, comprenant :
un ou plusieurs processeurs ; et
une mémoire exécutable destinée à stocker au moins un programme exécuté par les un ou plusieurs processeurs,
où l'au moins un programme sélectionne des blocs de transactions correspondant à un groupe d'encodage, génère au moins un segment d'encodage correspondant à chacun des nœuds participants en appliquant un encodage fontaine aux blocs de transactions, et stocke l'au moins un segment d'encodage correspondant à l'un des nœuds participants,
où l'au moins un programme sélectionne au moins un bloc de transaction systématique parmi les blocs de transaction et stocke l'au moins un bloc de transaction systématique sous la forme d'un ensemble de blocs de transaction systématiques de telle sorte que le bloc de transaction systématique soit directement accessible sans processus de décodage, et
où, parmi les blocs de transaction, des blocs de transaction restants, à l'exclusion du bloc de transaction systématique, sont supprimés.
